Europäisches Patentamt

European Patent Office

Office européen des brevets

(19)

(11) Veröffentlichungsnummer: **0 170 879**
**A1**

(12) # EUROPÄISCHE PATENTANMELDUNG

(21) Anmeldenummer: **85108188.5**

(22) Anmeldetag: **02.07.85**

(51) Int. Cl.⁴: **H 02 M 1/092**

(30) Priorität: **17.07.84 DE 3426769**

(43) Veröffentlichungstag der Anmeldung: **12.02.86**
**Patentblatt 86/7**

(84) Benannte Vertragsstaaten: **AT CH DE FR GB IT LI SE**

(71) Anmelder: **Siemens Aktiengesellschaft, Berlin und München Wittelsbacherplatz 2, D-8000 München 2 (DE)**

(72) Erfinder: **Heinzler, Franz, Dipl.-Ing., Im Heuschlag 24, D-8520 Erlangen (DE)**
Erfinder: **Führer, Wolfgang, Dipl.-Ing., Am Europakanal 4, D-8520 Erlangen (DE)**

(54) Schaltungsanordnung zur Überwachung eines Thyristors.

(57) Die Erfindung betrifft eine Schaltungsanordnung zur Überwachung eines Thyristors (1) zwischen dessen Anodenanschluß und Gateanschluß ein Hilfsthyristor (2) angeordnet ist, mit einer Signalgebervorrichtung (9), die eine Leuchtdiode (14) zur Aussendung von Lichtsignalen an eine Auswerteeinrichtung enthält.

Um einen besonders einfachen und daher funktionssicheren Aufbau der erfindungsgemäßen Schaltungsanordnung infolge Verzichts auf eine eigene Energieversorgungsschaltung zu erreichen und um eine Aussendung von Lichtsignalen mit besonders hoher Lichtleistung zu erzielen, liegt die Signalgebervorrichtung (9) mit ihren Eingangsanschlüssen (10 und 11) in Reihe mit dem Hilfsthyristor; die Leuchtdiode (14) ist zwischen den Eingangsanschlüssen (10 und 11) der Signalgebervorrichtung (9) angeordnet.

Siemens Aktiengesellschaft
Berlin und München

Unser Zeichen
VPA **84 P 3 2 6 7** E

Schaltungsanordnung zur Überwachung eines Thyristors

Die Erfindung betrifft eine Schaltungsanordnung zur Überwachung eines Thyristors, zwischen dessen Anodenanschluß und Gateanschluß ein Hilfsthyristor angeordnet ist, mit einer Signalgebervorrichtung, die eine Leuchtdiode zur Aussendung von Lichtsignalen an eine Auswerteeinrichtung enthält.

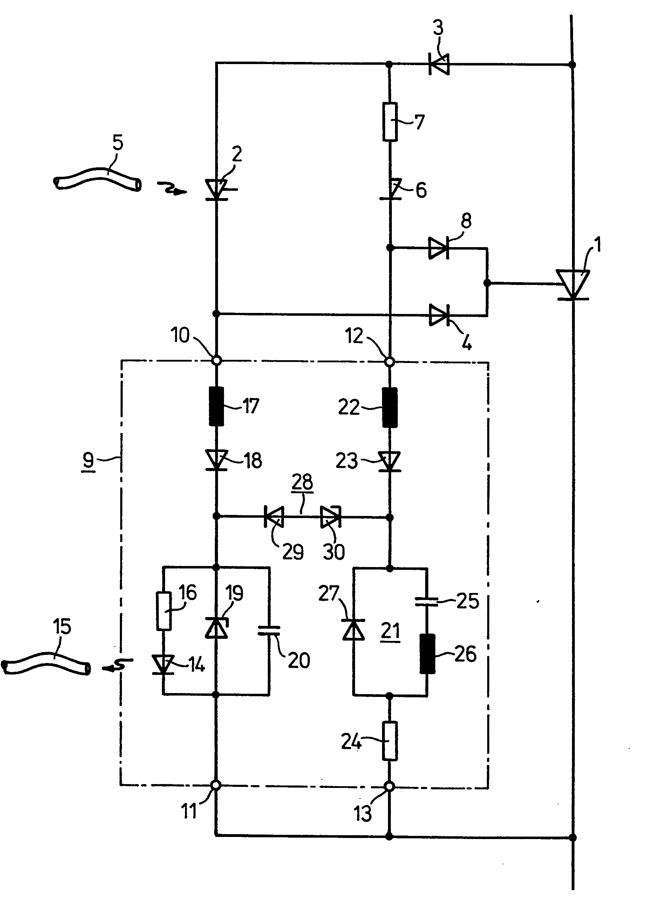

Aus der "etz", Heft 25, Band 102, Dezember 1981, Seite 1341f, Bild 7 ist eine Schaltungsanordnung zur Überwachung eines Thyristors bekannt. Die bekannte Schaltungsanordnung ist Bestandteil einer dem Thyristor zugeordneten Thyristorabschnittselektronik. Die Thyristorabschnittselektronik weist zu ihrer Stromversorgung eine eigene Energieversorgungsschaltung auf und wird über diese aus einer Hilfsenergieauskoppelschaltung gespeist, die in Reihe mit einem Bedämpfungswiderstand und einem Bedämpfungskondensator parallel zu dem Thyristor angeordnet ist. Zur Überwachung des Thyristors enthält die Thyristorabschnittselektronik eine Signalgebervorrichtung mit einem parallel zu dem Thyristor liegenden ohmschen Spannungsteiler, an dessen Teilerabgriff eine Signalverarbeitungsschaltung angeschlossen ist; dieser ist ein Lichtsender mit einer Leuchtdiode nachgeordnet, die bei Ansteuerung Lichtsignale über einen Lichtleiter an eine Auswerteeinrichtung aussendet. Die Ansteuerung des Thyristors erfolgt ebenfalls durch Lichtsignale, wozu die Thyristorabschnittselektronik einen Lichtsignalempfänger enthält, der ausgangsseitig über eine Steuerimpulserzeugungsschaltung mit dem Gateanschluß des Thyristors in Verbindung steht. In der obengenannten Druckschrift ist als weitere Möglichkeit zur Ansteuerung des Thyristors dessen Kombination mit einem lichtzündbaren

Bf 3 Ro / 25.06.1984

Hilfsthyristor erwähnt, wobei der Hilfsthyristor
zwischen dem Anodenanschluß und dem Gateanschluß des
Thyristors liegt.

Der Erfindung liegt die Aufgabe zugrunde, eine Schaltungsanordnung zur Überwachung eines Thyristors mit einem zugeordneten Hilfsthyristor anzugeben, die wegen Verzichts auf
eine eigene Energieversorgungsschaltung besonders einfach
und damit funktionssicher aufgebaut ist und die Aussendung
von Lichtsignalen mit besonders hoher Lichtleistung
ermöglicht.

Zur Lösung dieser Aufgabe liegt die Signalgebervorrichtung
der Schaltungsanordnung der eingangs angegebenen Art erfindungsgemäß mit ihren Eingangsanschlüssen in Reihe mit dem
Hilfsthyristor; die Leuchtdiode ist zwischen den Eingangsanschlüssen der Signalgebervorrichtung angeordnet.

Die Überwachung des Thyristors erfolgt durch die Aussendung
eines Lichtsignales an die Auswerteeinrichtung, sobald der
Thyristor von dem Hilfsthyristor ein Zündsignal erhält, um
von dem nichtleitenden Betriebszustand in den stromleitenden
Betriebszustand überzugehen. Dabei besteht der Vorteil der
erfindungsgemäßen Schaltungsanordnung darin, daß die Energie
der unmittelbar vor dem Zünden des Thyristors an diesem anliegenden Spannung genutzt wird, um beim Zünden des Thyristors
mit Hilfe des zugeordneten Hilfsthyristors die Leuchtdiode
zur Aussendung eines Lichtsignales anzusteuern. Eine eigene
Energieversorgungsschaltung zur Stromversorgung der erfindungsgemäßen Schaltungsanordnung ist daher nicht erforderlich.
Weiterhin lassen sich durch direkte Ausnutzung der Energie der
Spannung an dem Thyristor vor dem Zündzeitpunkt in der Leuchtdiode Lichtsignale mit besonders hoher Lichtleistung erzeugen,
so daß auch kostengünstigere, mit relativ hoher Dämpfung behaftete Lichtleiter zur Übertragung der Lichtsignale an die
Auswerteeinrichtung Verwendung finden können.

Bei einer vorteilhaften Ausbildung der erfindungsgemäßen Schaltungsanordnung liegt zwischen den Eingangsanschlüssen der Signalgebervorrichtung ein Vorwiderstand in Reihe mit der Leuchtdiode; parallel zu der Reihenschaltung aus dem Vorwiderstand und der Leuchtdiode ist ein Kondensator angeordnet. Nach dem Zünden des Hilfsthyristors wird nämlich der Kondensator durch die Spannung an dem Thyristor über den Hilfsthyristor aufgeladen und entlädt sich daraufhin über den Vorwiderstand und die Leuchtdiode; die Leuchtdiode gibt ein Lichtsignal an die Auswerteeinrichtung ab, dessen Zeitdauer im wesentlichen durch die Zeitkonstante des Kondensators und des Vorwiderstandes bestimmt ist.

Es ist von Vorteil, wenn parallel zu dem Kondensator ein Spannungsbegrenzerelement angeordnet ist, so daß bei der Zündung des Hilfsthyristors ein von der momentanen Größe der Spannung an dem Thyristor unmittelbar vor dessen Zündung unabhängiger Stromfluß durch die Leuchtdiode stattfindet und daher jedesmal Lichtsignale mit jeweils gleich großer Lichtleistung ausgesendet werden. Zusätzlich wird durch das Spannungsbegrenzerelement eine Überlastung der Leuchtdiode verhindert.

Die Signalgebervorrichtung der erfindungsgemäßen Schaltungsanordnung kann in vorteilhafter Weise mit ihren Eingangsanschlüssen zwischen dem Anodenanschluß und dem Gateanschluß des Thyristors angeordnet sein; sobald der Hilfsthyristor ein Zündsignal zum Zünden des Thyristors erhält, wird er leitend, so daß der Zündstrom für den Thyristor durch die Leuchtdiode fließt.

Von besonderem Vorteil ist eine Ausbildung der erfindungsgemäßen Schaltungsanordnung, bei der die Signalgebervorrichtung mit ihren Eingangsanschlüssen zwischen dem mit dem Gateanschluß des Thyristors in Verbindung stehenden Katodenanschluß des Hilfsthyristors und dem Katodenanschluß des
Thyristors angeordnet ist; sobald der Hilfsthyristor ein
Zündsignal zum Zünden des Thyristor erhält, wird er leitend
und verbindet die Eingangsanschlüsse der Signalgebervorrichtung mit der zum Zündzeitpunkt an dem Thyristor anliegenden
Spannung, so daß ein besonders hoher Stromfluß durch die
Leuchtdiode zur Aussendung eines Lichtsignals ermöglicht
ist.

Bei einer weiteren vorteilhaften Ausbildung der erfindungsgemäßen Schaltungsanordnung liegt in Reihe mit der Leuchtdiode zwischen den Eingangsanschlüssen der Signalgebervorrichtung eine Induktivität. Dadurch wird unmittelbar nach
dem Zünden des Hilfsthyristors eine kurzzeitige Verzögerung
des Stromflusses durch die Leuchtdiode erreicht, so daß
zunächst ein genügend großer Zündstrom über den Hilfsthyristor
in den Thyristor fließen kann, bevor ein Stromfluß in den
Kondensator und durch die Leuchtdiode stattfindet. Auf diese
Weise ist stets eine sichere Zündung des Thyristors
gewährleistet.

Es ist allgemein üblich und beispielsweise auch aus der
obengenannten Druckschrift bekannt, daß zwischen dem Anodenanschluß und Gateanschluß des Thyristors ein Schwellenspannungsschaltelement (zumeist eine Kippspannungsdiode oder
Break-Over-Diode) liegt, um eine Schutzzündung des Thyristors
zu ermöglichen. Dabei kann die Signalgebervorrichtung der
erfindungsgemäßen Schaltungsanordnung mit ihren Eingangsanschlüssen zwischen dem Anodenanschluß und dem Gateanschluß
des Thyristors derart angeordnet sein, daß sie zugleich mit
dem Hilfsthyristor und dem Schwellenspannungsschaltelement
jeweils in Reihe liegt. Auf diese Weise erfolgt sowohl bei
einer betriebsmäßigen Zündung des Thyristors durch den
Hilfsthyristor als auch bei einer Schutzzündung durch das
Schwellenspannungsschaltelement eine Ansteuerung der Leuchtdiode zur Aussendung eines Lichtsignales.

Ist die Signalgebervorrichtung mit ihren Eingangsanschlüssen zwischen dem Gateanschluß und dem Katodenanschluß des Thyristors angeordnet, so erhält man eine besonders vorteilhafte Ausbildung der erfindungsgemäßen Schaltungsanordnung dadurch, daß die Signalgebervorrichtung mit weiteren Eingangsanschlüssen in Reihe mit dem Schwellenspannungsschaltelement zwischen dem Anodenanschluß und dem Katodenanschluß des Thyristors liegt, daß die Signalgebervorrichtung einen Schwingkreis enthält der zwischen den weiteren Eingangsanschlüssen angeordnet ist, und daß der Schwingkreis über einen Energieauskopplungszweig mit der Reihenschaltung aus dem Vorwiderstand und der Leuchtdiode verbunden ist. Diese Ausbildung der erfindungsgemäßen Schaltungsanordnung bietet die vorteilhafte Möglichkeit, je nach dem, ob eine betriebsmäßige Zündung des Thyristors über den Hilfsthyristor, oder eine Schutzzündung des Thyristors über das Schwellenspannungsschaltelement stattgefunden hat, unterschiedliche Lichtsignale auszusenden. Wird der Thyristor betriebsmäßig über den Hilfsthyristor gezündet, so wird in der Leuchtdiode ein Lichtsignal in Form eines einzigen Lichtimpulses erzeugt. Bei einer Schutzzündung des Thyristors wird dagegen die Energie der Spannung an dem Thyristor dem Schwingkreis zugeführt, der diese Energie in mehreren Schwingungen über den Energieauskopplungszweig zur Ansteuerung der Leuchtdiode abgibt; die Leuchtdiode sendet daher mehrere Lichtimpulse aus, deren zeitlicher Abstand durch die Resonanzfrequenz des Schwingkreises bestimmt ist.

Eine Entkopplung der einen Eingangsanschlüsse und der weiteren Eingangsanschlüsse der Signalgebervorrichtung voneinander erfolgt in vorteilhafter Weise dadurch, daß der Hilfsthyristor und das Schwellenspannungsschaltelement über jeweils ein elektrisches Ventilelement mit dem Gateanschluß des Thyristors verbunden sind. Dadurch wird erreicht, daß sowohl beim Zünden des Hilfsthyristors, als auch beim Übergang des Schwellenspannungsschaltelementes in einen stromleitenden Zustand der Thyristor gezündet wird; gleichzeitig wird aber die Leuchtdiode beim Zünden des Thyristors durch den Hilfsthyristor nur direkt angesteuert und beim Zünden des Thyristors durch das Schwellenspannungsschaltelement nur indirekt über den Schwingkreis angesteuert.

Eine sichere Zündung des Thyristors durch das Schwellenspannungsschaltelement wird dadurch gewährleistet, daß in Reihe mit dem Schwingkreis zwischen den weiteren Eingangsanschlüssen der Signalgebervorrichtung eine weitere Induktivität liegt. Die weitere Induktivität bewirkt eine Verzögerung des Stromflusses in den Schwingkreis, so daß unmittelbar nach dem Übergang des Schwellenspannungsschalters in den stromleitenden Zustand zunächst ein genügend großer Zündstrom in den Thyristor fließen kann, bevor eine Anregung des Schwingkreises erfolgt.

Der Schwingkreis enthält vorteilhafterweise eine Reihenschaltung aus einem Schwingkreiskondensator und einer Schwingkreisinduktivität, sowie eine zu dieser Reihenschaltung parallel liegende Freilaufdiode; in dem Energieauskopplungszweig ist eine Diode derart angeordnet, daß sie in Reihe mit der Leuchtdiode antiparallel zu der Freilaufdiode liegt. Die Freilaufdiode ermöglicht zusammen mit der Diode in dem Energieauskopplungszweig ein freies Schwingen des Schwingkreises, wobei die in dem Schwingkreis schwingende Energie während jeweils einer halben Schwingungsperiode einen Stromfluß durch die Freilaufdiode und während der jeweils anderen halben Schwingungsperiode einen Stromfluß durch den Energieauskopplungszweig und die Leuchtdiode erzeugt.

Bei einer weiteren vorteilhaften Ausführung der erfindungsgemäßen Schaltungsanordnung enthält der Energieauskopplungszweig ein mit der Diode in Reihe liegendes weiteres Schwellenspannungsschaltelement. Dadurch läßt sich nämlich die Zahl der Lichtimpulse des Lichtsignales vorgeben, die bei einer Schutzzündung des Thyristors durch das weitere Schwellenspannungsschaltelement von der Leuchtdiode ausgesandt werden sollen. Dazu ist das weitere Schwellenspannungsschaltelement derart bemessen, daß nach der Aussendung der vorgegebenen Anzahl von Lichtimpulsen die Energie in dem Schwingkreis nicht mehr ausreicht, um einen weiteren Stromfluß durch den Energieauskopplungszweig zu der Leuchtdiode zu ermöglichen.

Zur Erläuterung der Erfindung ist in der Zeichnung ein bevorzugtes Ausführungsbeispiel der erfindungsgemäßen Schaltungsanordnung dargestellt.

Die Zeichnung zeigt einen zu überwachenden Thyristor 1, der beispielsweise zusammen mit weiteren Thyristoren in einem Ventilzweig einer Stromrichteranordnung angeordnet sein kann. Dem Thyristor 1 ist ein Hilfsthyristor 2 zugeordnet, der in Reihe mit einer Schutzdiode 3 und einem elektrischen Ventilelement 4 zwischen dem Anodenanschluß und dem Gateanschluß des Thyristors 1 liegt. Der Hilfsthyristor 2 ist ein lichtzündbarer Thyristor, der an einem Leitungsende eines hier nur abschnittsweise dargestellten Lichtleiters 5 optisch angekoppelt ist; das andere Leitungsende des Lichtleiters 5 ist an einem nicht dargestellten Lichtsender angeschlossen. Dem Thyristor 1 ist weiterhin ein Schwellenspannungsschaltelement 6 zugeordnet, das in Reihe mit der Schutzdiode 3, einem Schutzwiderstand 7 und einem weiteren elektrischen Ventilelement 8 zwischen dem Anodenanschluß und dem Gateanschluß des Thyristors 1 angeordnet ist. Das Schwellenspannungsschaltelement 6 besteht aus einer Kippspannungsdiode (Break-Over-Diode). Das dargestellte Aus-

0170879

führungsbeispiel der erfindungsgemäßen Schaltungsanordnung enthält eine Signalgebervorrichtung 9, die mit Eingangsanschlüssen 10 und 11 in Reihe mit dem Hilfsthyristor 2 zwischen dem Anodenanschluß und dem Katodenanschluß des Thyristors 1 liegt und mit weiteren Eingangsanschlüssen 12 und 13 in Reihe mit dem Schwellenspannungsschaltelement 6 zwischen dem Anodenanschluß und dem Katodenanschluß des Thyristors 1 angeordnet ist. Die Signalgebervorrichtung 9 enthält eine Leuchtdiode 14, die an einem Leitungsende eines weiteren, hier ebenfalls nur abschnittsweise dargestellten Lichtleiters 15 optisch angekoppelt ist, wobei das andere Ende des Lichtleiters 15 an einer nicht dargestellten Auswerteeinrichtung angeschlossen ist. Die Leuchtdiode 14 ist in Reihe mit einem Vorwiderstand 16 zwischen den Eingangsanschlüssen 10 und 11 der Signalgebervorrichtung 9 angeordnet und mit diesen über eine Induktivität 17 und eine weitere Schutzdiode 18 verbunden. Parallel zu der Reihenschaltung aus der Leuchtdiode 14 und dem Vorwiderstand 16 liegt ein Spannungsbegrenzerelement 19 und ein Kondensator 20. Ein Schwingkreis 21 ist in Reihe mit einer weiteren Induktivität 22, einer zusätzlichen Schutzdiode 23 und einem Schutzwiderstand 24 zwischen den weiteren Eingangsanschlüssen 12 und 13 der Signalgebervorrichtung 9 angeordnet. Der Schwingkreis 21 enthält einen Schwingkreiskondensator 25, eine mit diesem in Reihe liegende Schwingkreisinduktivität 26 und eine zu der Reihenschaltung aus dem Schwingkreiskondensator 25 und der Schwingkreisinduktivität 26 parallel liegende Freilaufdiode 27. Der Schwingkreis 21 ist über einen Energieauskopplungszweig 28 mit der Reihenschaltung aus der Leuchtdiode 14 und dem Vorwiderstand 16 verbunden. Der Energieauskopplungszweig 28 enthält eine Diode 29 und ein mit dieser in Reihe liegendes weiteres Schwellenspannungsschaltelement 30, wobei die Diode 29 derart angeordnet ist, daß sie zusammen in Reihe mit der Leuchtdiode 14 antiparallel zu der Freilaufdiode 27 des Schwingkreises 21 liegt. Das weitere Schwellenspannungsschaltelement 30 kann beispielsweise aus einer Zenerdiode oder aus einer Kippspannungsdiode bestehen.

Sobald die Richtung der an dem Thyristor 1 liegenden Spannung mit seiner Durchlaßrichtung übereinstimmt, ist eine Zündung des Thyristors 1 möglich. Eine betriebsmäßige Zündung des Thyristors 1 erfolgt durch Aussendung eines Lichtimpulses von dem nicht dargestellten Lichtsender an den Hilfsthyristor 2. Sobald dieser leitend wird, bewirkt die Spannung an dem Thyristor 1 einen impulsförmigen Strom durch den Hilfsthyristor 2. Ein Teil dieses Stromimpulses fließt über das elektrische Ventil 4 zu dem Gateanschluß des Thyristors 1 und bewirkt dessen Zündung. Der restliche Teil des Stromimpulses fließt über den Eingangsanschluß 10 in die Signalgebervorrichtung 9 und bewirkt neben einem Stromfluß durch die Leuchtdiode 14 vor allem eine Aufladung des Kondensators 20. Das Spannungsbegrenzerelement 19 verhindert dabei, daß die Spannung an der Reihenschaltung aus der Leuchtdiode 14 und dem Vorwiderstand 16 einen vorgegebenen Wert überschreitet, so daß die Leuchtdiode 14 gegen eine Überlastung geschützt ist. Nach Beendigung des Stromimpulses durch den Hilfsthyristor 2 entlädt sich der Kondensator 20 über die Leuchtdiode 14 und dessen Vorwiderstand 16, wobei der Entladestrom in der Leuchtdiode in ein Lichtsignal umgewandelt wird. Die Dauer des Lichtsignales ist im wesentlichen von der Zeitkonstante des Kondensators 20 und des Vorwiderstandes 16 abhängig.

Eine Schutzzündung des Thyristors 1 ist immer dann notwendig, wenn eine normale betriebsmäßige Zündung nicht erfolgt ist und die Spannung an dem Thyristor 1 einen Maximalwert zu überschreiten droht, der eine Zerstörung des Thyristors 1 zur Folge hat. Das Schwellenspannungsschaltelement 6 weist eine Schwellenspannung auf, die kleiner ist, als der zulässige Maximalwert der Spannung an dem Thyristor 1. Sobald die Spannung an dem Thyristor 1 und damit die Spannung an dem Schwellenspannungsschaltelement 6 den vorgegebenen Schwellenwert überschreitet, kippt das Schwellenspannungsschaltelement 6 in einem stromleitenden Zustand, so daß ein impulsförmiger Strom durch das Schwellenspannungsschaltelement 6 fließt. Ein Teil dieses Stromimpulses fließt
über das elektrische Ventil 8 zu dem Gateanschluß des
Thyristors 1 und bewirkt dessen Zündung. Der restliche Teil
des Stromimpulses fließt über die Induktivität 22 und die
Schutzdiode 23 in den Schwingkreis 21 und über den Energieauskopplungszweig 28 durch die Leuchtdiode 14. Die Freilaufdiode 27 und die Diode 29 in dem Energieauskopplungszweig 28
ermöglichen ein freies Schwingen des Schwingkreises 21,
wobei während jeweils einer halben Schwingungsperiode der
Strom in dem Schwingkreis 21 durch die Freilaufdiode 27
fließt; während der jeweils folgenden halben Schwingungsperiode fließt der Strom über den Energieauskopplungszweig 28
durch die Leuchtdiode 14 in den Schwingkreis 21 wieder
zurück, so daß die Leuchtdiode 14 jedesmal ein Lichtsignal
aussendet. Das weitere Schwellenspannungsschaltelement 30
ist derart bemessen, daß nach Aussendung einer vorgegebenen
Anzahl von Lichtimpulsen die Energie in dem Schwingkreis 21
nicht mehr ausreicht, um einen weiteren Stromfluß über den
Energieauskopplungszweig 28 zur Ansteuerung der Leuchtdiode
14 zu ermöglichen.

Empfängt die Auswerteeinrichtung keine Lichtsignale von der
Leuchtdiode 14, so deutet dieses auf einen defekten (durchlegierten) Thyristor 1 hin. In diesem Fall kann an dem
Thyristor 1 keine Spannung auftreten, so daß auch keine
Energie zur Ansteuerung der Leuchtdiode 14 zur Verfügung
steht.

1 Figur
11 Ansprüche

Patentansprüche

1. Schaltungsanordnung zur Überwachung eines Thyristors (1), zwischen dessen Anodenanschluß und Gateanschluß ein Hilfsthyristor (2) angeordnet ist, mit einer Signalgebervorrichtung (9), die eine Leuchtdiode (14) zur Aussendung von Lichtsignalen an eine Auswerteeinrichtung enthält, d a d u r c h   g e k e n n z e i c h n e t , daß die Signalgebervorrichtung (9) mit ihren Eingangsanschlüssen (10 und 11) in Reihe mit dem Hilfsthyristor (2) liegt und daß die Leuchtdiode (14) zwischen den Eingangsanschlüssen (10 und 11) der Signalgebervorrichtung (9) angeordnet ist.

2. Schaltungsanordnung nach einem der vorangehenden Ansprüche, d a d u r c h   g e k e n n z e i c h n e t , daß zwischen den Eingangsanschlüssen (10 und 11) der Signalgebervorrichtung (9) ein Vorwiderstand (16) in Reihe mit der Leuchtdiode (14) liegt und daß parallel zu der Reihenschaltung aus dem Vorwiderstand (16) und der Leuchtdiode (14) ein Kondensator (20) angeordnet ist.

3. Schaltungsanordnung nach Anspruch 2, d a d u r c h   g e k e n n z e i c h n e t , daß parallel zu dem Kondensator (20) ein Spannungsbegrenzerelement (19) angeordnet ist.

4. Schaltungsanordnung nach einem der vorangehenden Ansprüche, d a d u r c h   g e k e n n z e i c h n e t , daß die Signalgebervorrichtung mit ihren Eingangsanschlüssen zwischen dem Anodenanschluß und dem Gateanschluß des Thyristors angeordnet ist.

5. Schaltungsanordnung nach einem der Ansprüche 1 bis 3, d a d u r c h   g e k e n n z e i c h n e t , daß die Signalgebervorrichtung (9) mit ihren Eingangsanschlüssen (10 und 11) zwischen dem mit dem Gateanschluß des Thyristors (1) in Verbindung stehenden Katodenanschluß des Hilfsthyristors (2) und dem Katodenanschluß des Thyristors (1)
angeordnet ist.

6. Schaltungsanordnung nach Anspruch 5, d a d u r c h
g e k e n n z e i c h n e t , daß in Reihe mit der Leuchtdiode (14) zwischen den Eingangsanschlüssen (10 und 11) der
Signalgebervorrichtung (9) eine Induktivität (17) liegt.

7. Schaltungsanordnung nach Anspruch 5 oder 6, wobei
zwischen dem Anodenanschluß und dem Gateanschluß des
Thyristors (1) ein Schwellenspannungsschaltelement (6)
liegt, d a d u r c h   g e k e n n z e i c h n e t , daß
die Signalgebervorrichtung (9) mit weiteren Eingangsanschlüssen (12 und 13) in Reihe mit dem Schwellenspannungsschaltelement (6) zwischen dem Anodenanschluß und dem
Katodenanschluß des Thyristors (1) liegt, daß die Signalgebervorrichtung (9) einen Schwingkreis (21) enthält,
der zwischen den weiteren Eingangsanschlüssen (12 und 13)
angeordnet ist, und daß der Schwingkreis (21) über einen
Energieauskopplungszweig (28) mit der Reihenschaltung aus
der Leuchtdiode (14) und dem Vorwiderstand (16) verbunden
ist.

8. Schaltungsanordnung nach Anspruch 7, d a d u r c h
g e k e n n z e i c h n e t,  daß der Hilfsthyristor (2) und
das Schwellenspannungsschaltelement (6) über jeweils ein
elektrisches Ventilelement (4 bzw. 8) mit dem Gateanschluß
des Thyristors (1) verbunden sind.

9. Schaltungsanordnung nach Anspruch 7 oder 8,
d a d u r c h   g e k e n n z e i c h n e t , daß in Reihe
mit dem Schwingkreis (21) zwischen den weiteren Eingangsanschlüssen (12 und 13) der Signalgebervorrichtung (9) eine
weitere Induktivität (22) liegt.

0170879

10. Schaltungsanordnung nach einem der Ansprüche 7 bis 9, d a d u r c h   g e k e n n z e i c h n e t , daß der Schwingkreis (21) eine Reihenschaltung aus einem Schwingkreiskondensator (25) und einer Schwingkreisinduktivität (26) sowie eine zu dieser Reihenschaltung parallel liegende Freilaufdiode (27) enthält und daß in dem Energieauskopplungszweig (28) eine Diode (29) derart angeordnet ist, daß sie in Reihe mit der Leuchtdiode (14) antiparallel zu der Freilaufdiode (27) liegt.

11. Schaltungsanordnung nach Anspruch 7, d a d u r c h   g e k e n n z e i c h n e t , daß der Engergieauskopplungs- zweig (28) weiterhin ein mit der Diode (29) in Reihe liegendes weiteres Schwellenspannungsschaltelement (30) ent- hält.

Europäisches
Patentamt

**EUROPÄISCHER RECHERCHENBERICHT**

0170879

Nummer der Anmeldung

EP 85 10 8188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | PATENTS ABSTRACTS OF JAPAN, Band 6, Nr. 264 (E-150) [1142], 23. Dezember 1982; & JP - A - 57 160 365 (FUJI DENKI SEIZO K.K.) 02.10.1982 | 1 | H 02 M 1/092 |
| | --- | | |
| A | PATENTS ABSTRACTS OF JAPAN, Band 6, Nr. 252 (P-161) [1130], 10. Dezember 1982; & JP - A - 57 150 005 (MEIDENSA K.K.) 16.09.1982 | | |
| | --- | | |
| A | EP-A-0 071 945 (SIEMENS) | | |
| | ----- | | |

| RECHERCHIERTE SACHGEBIETE (Int. Cl.4) |
|---|
| H 02 M |
| H 03 K |
| H 02 H |

Der vorliegende Recherchenbericht wurde für alle Patentansprüche erstellt

| Recherchenort | Abschlußdatum der Recherche | Prüfer |
|---|---|---|
| DEN HAAG | 15-10-1985 | KERN H. |